Europäisches Patentamt

European Patent Office

Office européen des brevets

(19)

(11) Veröffentlichungsnummer: **0 281 014 B1**

(12) **EUROPÄISCHE PATENTSCHRIFT**

(45) Veröffentlichungstag der Patentschrift: **25.09.91**

(51) Int. Cl.⁵: **G01V 3/10**

(21) Anmeldenummer: **88102790.8**

(22) Anmeldetag: **25.02.88**

(54) **Induktives Metallsuchgerät.**

(30) Priorität: **06.03.87 DE 3707210**

(43) Veröffentlichungstag der Anmeldung:
**07.09.88 Patentblatt 88/36**

(45) Bekanntmachung des Hinweises auf die
Patenterteilung:
**25.09.91 Patentblatt 91/39**

(84) Benannte Vertragsstaaten:
**DE FR GB SE**

(56) Entgegenhaltungen:
**US-A- 3 340 464**
**US-A- 3 471 772**
**US-A- 3 764 860**

(73) Patentinhaber: **Institut Dr. Friedrich Förster**
**Prüfgerätebau GmbH & Co. KG**
**Postfach 1564 In Laisen 70**
**W-7410 Reutlingen 1(DE)**

(72) Erfinder: **Ausländer, Klaus, Dipl.-Ing. (FH)**
**Peter-Cornelius-Strasse 19**
**W-7410 Reutlingen(DE)**
Erfinder: **Patzwald, Wolfgang, Dipl.-Phys.**
**Gumpperweg 36**
**W-7410 Reutlingen(DE)**
Erfinder: **Fabris, Hans Jürgen, Dipl.-Ing. (FH)**
**Scheffelweg 29**
**W-7417 Pfullingen(DE)**
Erfinder: **Seichter, Helmut, Dr. Dipl.-Phys.**
**Elsterweg 112**
**W-7417 Pfullingen(DE)**

## Beschreibung

Die Erfindung betrifft ein Metallsuchgerät gemäß dem Oberbegriff von Patentanspruch 1.

Derartige Suchgeräte sind seit langem in einer großen Vielfalt von Arten und Ausführungen bekannt so z.B. aus der US-A-3340464. Sie dienen im allgemeinen zum Entdecken von in einem Medium wie beispielsweise dem Erdboden verborgenen metallischen Gegenständen. Man bedient sich dabei der Erscheinung, daß in vom magnetischen Wechselfeld der Suchspule erfaßten metallischen Gegenständen Wirbelströme induziert werden, die ihrerseits ein Gegenfeld aufbauen, das auf die Suchspule zurückwirkt. Die auf dieser Rückwirkung beruhenden Signale in der Empfängerwicklung werden ausgewertet und zur Anzeige gebracht. Die Signale weisen entsprechend den physikalischen Eigenschaften der Gegenstände, von denen sie hervorgerufen werden, charakteristische Unterschiede insbesondere bezüglich ihrer Phasenlage auf. Diese wird daher vielfach zum richtigen Einordnen der Art der entdeckten Gegenstände benützt.

Häufig werden die Nutzsignale von Störsignalen überlagert, die dem Betrag nach sehr viel größer sein können als die Signale aufzusuchender Gegenstände. Hier ist einerseits der Erdboden von Bedeutung, der die Suchgegenstände umgibt. Dieser kann mineralische Bestandteile enthalten, die eine magnetische Permeabilität größer als eins besitzen. Man spricht dann von magnetisierbarem Erdboden, der einen zusätzlichen magnetischen Wechselfluß durch die Suchspule zur Folge hat und damit ein Signal in der letzteren bewirkt. Andererseits kann, insbesondere an Stränden, Salzwasser das die Suchgegenstände umgebende Medium sein. In diesem Zusammenhang spricht man von der Rückwirkung eines elektrisch schwach leitenden Mediums auf die Suchspule. Die beschriebenen Hintergrundeffekte haben interessanterweise Störsignale zur Folge, die in einem bestimmten Frequenzbereich aufeinander senkrecht stehen und zwar fallen die Signale von magnetisierbarem Erdboden in die 90°-Richtung und Signale von einem elektrisch schwach leitenden Medium etwa in die 0°-Richtung der Scheinwiderstandsebene. Sie stehen damit in einer festen Phasenbeziehung zu den Signalen der verschiedenen Suchgegenstände. Dieser Umstand kann nun benutzt werden, um Nutz- und Störsignale voneinander zu trennen und die Auswirkung von Störsignalen auf das Suchergebnis zu unterdrücken.

Ein magnetisierbarer Erdboden mit einer magnetischen Permeabilität von $\mu = 1,15$ erzeugt in der Empfängerwicklung eines typischen Metallsuchgerätes eine Signalspannung von etwa 50 mV. Beim gleichen Suchgerät liegt die Grenzempfindlichkeit der Signalspannung für den kleinsten nachweisbaren Metallkörper in der Größenordnung von 1 µV. Dem Suchsignal des kleinsten noch nachweisbaren Metallkörpers kann also ein 50 000 mal größeres Störsignal überlagert sein. Soll ein solches Störsignal durch Maßnahmen der Phasenselektion unterdrückt werden, so ist eine Stabilität der Phasenlage auf einen winzigen Bruchteil von 1° erforderlich. Selbst wenn die Phasenrichtung des Suchsignales des o.g. Metallkörpers sich um 90° von der des Störsignals unterscheidet, so kann bei einem derart großen Störsignal schon eine sehr kleine Phasendrehung im Signalkanal eine Komponente des Störsignals in der Phasenrichtung des Suchsignals hervorrufen, die um ein Vielfaches größer ist als der Betrag der letzteren. In Erreger- und Empfängerwicklung, in Verstärkern und Filtern, die zur Signalverarbeitung vorgesehen sind, treten innerhalb des gegebenen Temperaturbereiches Phasendriften auf, die in ihrer Summe in der Größenordnung von 2 - 5° liegen können. Auch durch Einsatz besonders stabiler Bauelemente können diese Phasendriften nur geringfügig reduziert werden.

Die Erfindung macht sich daher ein Metallsuchgerät der eingangs definierten Art zur Aufgabe, bei dem durch entsprechende Maßnahmen die Phasendriften im Signalkanal im erforderlichen Maß unterdrückt werden.

Diese Aufgabe wird gelöst durch ein Metallsuchgerät gemäß Anspruch 1.

Die erfindungsgemäße Lösung erlaubt es, die Signalphasenlagen im gesamten Übertragungskanal des Suchgerätes einschließlich Erreger- und Empfängerwicklung äußerst stabil konstant zu halten. Dadurch wird es möglich, mit großer Präzision auf die absoluten Phasenwinkel in der Scheinwiderstandsebene einer Suchspule Bezug zu nehmen, die von bestimmten Suchgegenständen oder Störhintergründen hervorgerufen werden. Auf diese Weise werden insbesondere die Voraussetzungen für eine wirksame Unterdrückung von Störhintergründen, wie magnetisierbarer Erdboden oder ein elektrisch schwach leitendes Medium, geschaffen. Nach einer Ausgestaltung der Erfindung benutzt der Referenzphasengeber eine Leiterschleife, die sowohl mit der Erreger- als auch mit der Empfängerwicklung gekoppelt ist und die durch einen Schalter geschlossen werden kann. Eine weitere Ausgestaltung der Erfindung macht die Trennung des Referenzsignals aus dem Referenzphasengeber von anderen Signalen dadurch möglich, daß man das Referenzsignal durch den genannten Schalter periodisch mit einer Referenzschaltfrequenz $f_{RS}$ ein- und ausschaltet. Nach einer besonders vorteilhaften Ausgestaltung der Erfindung wird diese Trennung erreicht, indem der phasengesteuerte Demodulator bei eingeschaltetem Referenzsignal mit einem Steuersignal einer ersten Steuerphasenlage gesteuert wird und bei ausgeschaltetem Referenzsignal mit einem Steuersignal einer von der ersten um 180° abweichenden zweiten Steuerphasenlage gesteuert wird. Eine weitere vorteilhafte Ausgestaltung der Erfindung wird darin gesehen, daß man die Steuersignale des phasengesteuerten Gleichrichters senkrecht auf dem Referenzsignal des Referenzphasengebers stehen läßt.

In den abhängigen Ansprüchen werden noch weitere vorteilhafte Ausgestaltungen der Erfindung angegeben.

Im folgenden soll die Erfindung anhand von Beispielen und mit Hilfe einiger Figuren näher erläutert werden. Es zeigen im einzelnen

Figur 1        ein Suchgerät mit Phasenregelkreis

Figur 2, 3, 4    alternative Ausführungsformen von Phasenregelkreisen

Figur 5        Zeitdiagramme phasendemodulierter Signale

Figur 6, 7, 8    Zeitdiagramme zu den Figuren 2, 3, 4.

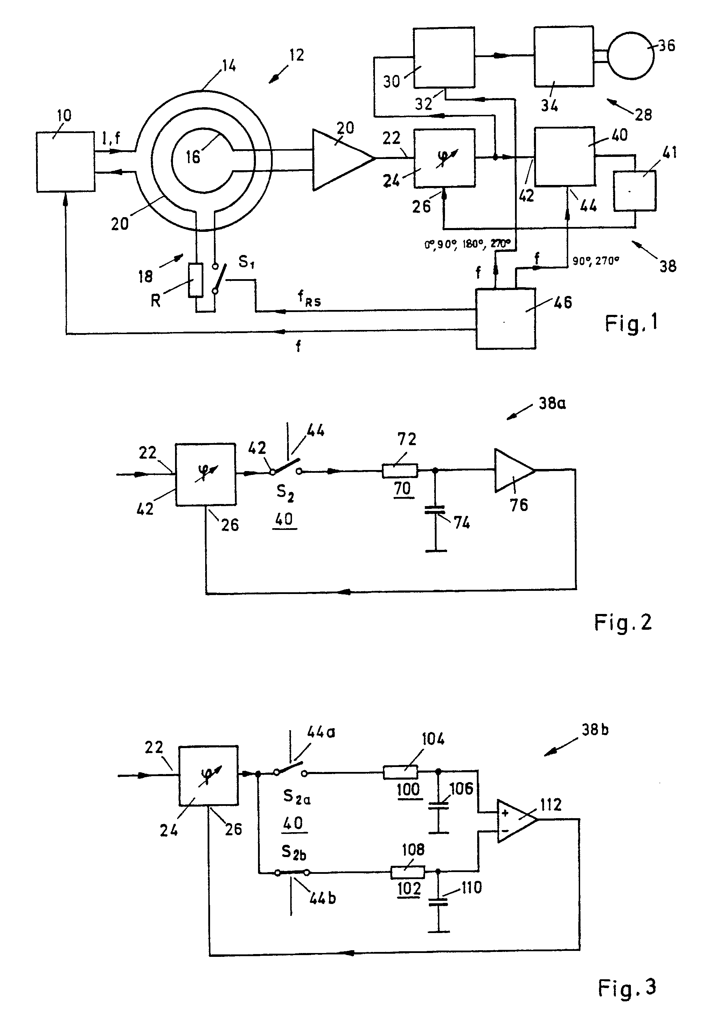

Figur 1 zeigt das Prinzipschaltbild eines erfindungsgemäßen Metallsuchgerätes. Darin speist eine Wechselstromquelle 10 die Erregerwicklung 14 einer Suchspule 12 mit einem Wechselstrom I der Frequenz f und bewirkt damit ein magnetisches Wechselfeld in der Umgebung der Suchspule 12. Eine gleichfalls zur Suchspule 12 gehörende Empfängerwicklung 16 nimmt Signale auf, die auf Wechselwirkungen des Magnetfeldes mit elektrisch leitenden Suchgegenständen oder in die letzteren umgebenden Medien beruhen. Mittel zur Kompensation eines Dauersignales, das von der Erregerwicklung 14 in der Empfängerwicklung 16 induziert wird, sind im vorliegenden Fall ohne Bedeutung und daher nicht dargestellt. Solche Mittel sind den einschlägigen Fachleuten wohlbekannt und können beispielsweise in einer besonderen Kompensationswicklung oder in einer Differenzausführung der Empfängerwicklung bestehen, sie können aber auch nur rein elektronischer Art sein und einen Teil der Auswerteelektronik bilden. Im vorliegenden Beispiel sollen die Erregerwicklung 14 und die Empfängerwicklung 16 in einer Ebene liegen. Beide können in bekannter Weise eine Vielzahl von Windungen besitzen. Etwa in der Mitte zwischen den beiden Wicklungen 14, 16 ist eine Leiterschleife 20 angeordnet, die nur eine Windung aufweisen soll und die gleichermaßen mit Erregerwicklung 14 und Empfängerwicklung 16 gekoppelt ist. Die Leiterschleife 20 bildet einen Teil eines Referenzphasengebers 18. Zum letzteren gehören ferner der ohmsche Gesamtwiderstand R der Leiterschleife 20 und ein Schalter S₁, der in Serie mit der Leiterschleife geschaltet ist. Der Schalter S₁ ist als elektronischer Schalter ausgelegt und kann durch elektrische Signale gesteuert werden. Wählt man den Widerstand R so, daß er groß ist gegenüber dem induktiven Widerstand $2\pi fL$ der Leiterschleife 20 mit der Induktivität L, so erhält man in der Empfängerwicklung Referenzsignale, deren Phasenwinkel mit der 0°-Richtung der Scheinwiderstandsebene zusammenfällt. An den Ausgang der Empfängerspule 16 ist der Eingang eines Vorverstärkers 20 gelegt, dessen Ausgang mit dem Signaleingang 22 eines Phasendrehgliedes 24 verbunden ist. Dieses besitzt zusätzlich einen Steuereingang 26. Durch Steuersignale am Steuereingang 26 läßt sich die Phasenlage der an den Signaleingang 22 gelangenden Signale in beiden Richtungen verändern. Als Phasendrehglied 24 kann ein sogenannter Allpaß vorgesehen sein. Ebenso ist es möglich, daß ein ohnehin zur Filterung der Signale benötigter Bandpaß als Phasendrehglied 24 verwendet wird. An den Ausgang des Phasendrehgliedes 24 ist der Eingang der Auswerteelektronik 28 geschaltet. Diese besteht aus einer Phasenauswerteschaltung 30 mit einem Steuereingang 32, weiteren Auswertestufen 34 und einem daran angeschlossenen Anzeigeorgan 36. Die Auswertung einschließlich der Phasenauswertung ist in diesem Zusammenhang ohne Belang. Sie kann in beliebiger bekannter Weise ausgeführt werden und ist daher hier nicht näher beschrieben. Von entscheidender Bedeutung für die vorliegende Erfindung ist jedoch ein Phasenregelkreis 38, der aus dem Phasendrehglied 24, einem phasenselektiven Demodulator 40 und Integriergliedern 41 besteht und der weiter unten in verschiedenen Ausführungsformen näher beschrieben werden soll. Der Signaleingang 42 des letzteren ist mit dem Ausgang des Phasendrehgliedes 24, der Ausgang des phasenselektiven Demodulators 40 über die Integrierglieder 41 mit dem Steuereingang 26 des Phasendrehgliedes 24 verbunden. Der phasenselektive Demodulator 40 besitzt weiterhin noch einen Steuereingang 44. Zum beschriebenen Metallsuchgerät gehört schließlich noch ein Taktgeber 46. In diesem erzeugt ein Quarzoszillator eine Mutterfrequenz $f_a$, von der neben der Frequenz f des Erregerstromes I auch die Referenzschaltfrequenz $f_{RS}$ für den Schalter S₁ des Referenzphasengebers 18 durch entsprechende Frequenzteilung abgeleitet ist. Des weiteren werden dem Taktgeber 46 auch Steuersignale der Frequenz f in den Phasenlagen der Quadranten der Scheinwiderstandsebene zur Steuerung des phasenselektiven Demodulators 40 und der Phasenauswerteschaltung 30 entnommen.

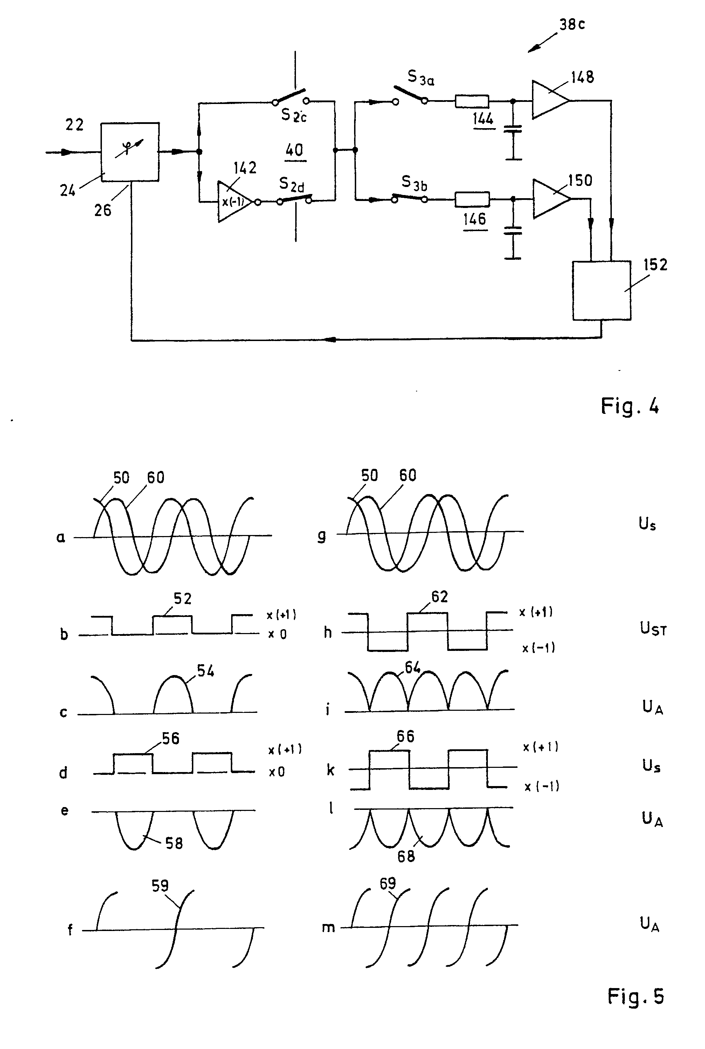

In den Figuren 5 a - f ist zum besseren Verständnis des weiteren die bekannte Wirkungsweise eines phasenselektiven Demodulators dargestellt. Ein 90°-Signal 50 (Figur 5 a) wird im Takt einer 90°-Steuerspannung 52 (Figur 5 b) mit den Faktoren +1 und 0 multipliziert. Es ergibt sich ein positives Ausgangssignal 54 (Figur 5 c). Führt man die gleiche Multiplikation im Takt eines 270°-Steuersignales 56 (Figur 5 d) durch, so ergibt sich ein negatives Ausgangssignal 58 (Figur 5 a). Multipliziert man ein 0°-Signal 60 (Fig. 5 a) im Takt eines 90°-Steuersignales 52 (Figur 56) mit den Faktoren +1 und 0, so ergibt sich ein Ausgangssignal 59 (Figur 5 f) mit gleichwertigen positiven und negativen Anteilen, das nach Integration in einem Tiefpaßglied zu Null wird. Neben der in den Figuren 5 a - f dargestellten Halbwellendemodulation gibt es auch eine Vollwellendemodulation nach Figuren 5 g - m. Im diesem Falle werden die Signale 50, 60 statt mit Faktoren 0 und +1 mit Faktoren +1 und -1 im Takt der 90°- bzw. 270°-Steuersignale 62 multipliziert. Dabei ergeben sich statt der bisherigen positiven oder negativen Halbwellensignale 54, 58 positive oder negative Vollwellensignale 64, 68. In gleicher Weise weist auch das Ausgangssignal 69 (Figur 5 m), das aufgrund eines 0°-Signales 60 mit 90°-Steuersignalen 62 erzielt wurde in jeder Halbperiode einen Wellenzug mit gleichem positiven und negativen Anteil auf, so daß wiederum die Integration durch ein Tiefpaßglied zur Spannung Null führt. Abweichungen des Phasenwinkels eines Signales 60 von 0° in positiver oder negativer Richtung haben entsprechende positive bzw. negative Abweichungen des Ausgangssignales 59, 69 vom Wert Null zur Folge. Dies wird bei der Herstellung des Regelsignales für den Steuereingang 26 des Phasendrehgliedes 24 im phasenselektiven Demodulator 40 ausgenutzt. Wenn die Summe aller Phasendrehungen im gesamten Signalkanal bis zum Eingang 42 des phasenselektiven Demodulators Null beträgt, steht ein entsprechendes Steuersignal mit dem Betrag Null am Steuereingang 26 des Phasendrehgliedes 24.

Figur 2 stellt eine Ausführungsform eines Phasenregelkreises (38 a) dar. Darin ist der phasenselektive Demodulator 40 durch einen Schalter S2 realisiert, an dessen Steuereingang 44 das Steuersignal aus dem Taktgeber 46 liegt. Vom Ausgang des Schalters S2 gelangt die Signalspannung über ein Tiefpaßglied 70, bestehend aus Widerstand 72 und Kondensator 74, und über eine Trennstufe 76 an den Steuereingang 26 des Phasendrehgliedes 24.

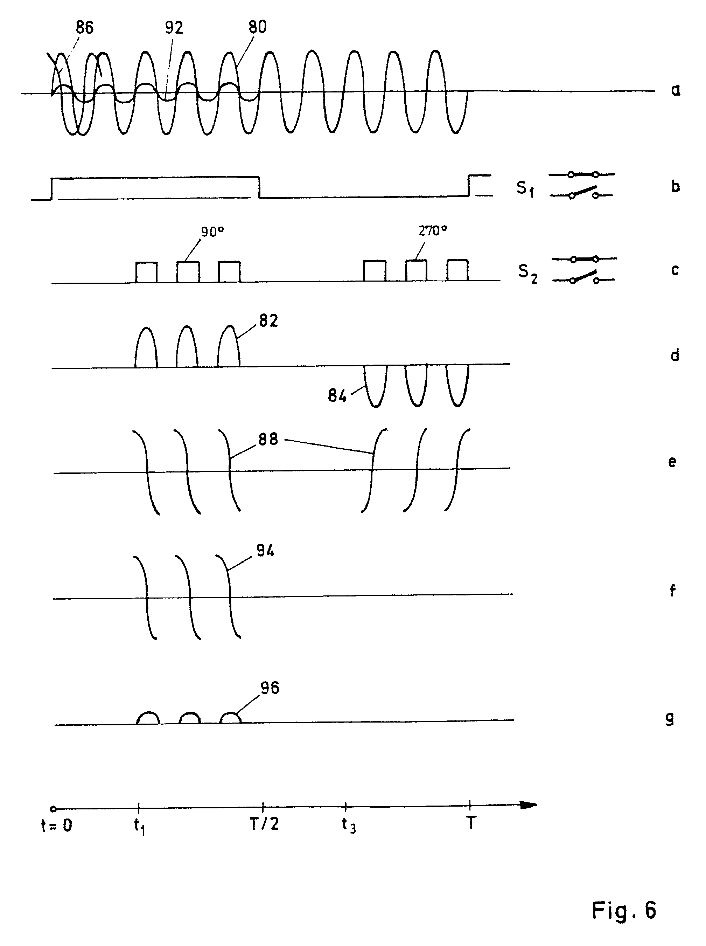

Zum besseren Verständnis der Vorgänge sind die in Phasenregelkreis 38 a verarbeiteten Signale in Figur 6 dargestellt. Am Eingang von Schalter S2 liegt ein Signal 80 (Figur 6 a) der Phasenlage 90°, das von magnetisierbarem Erdboden herrühren möge. Schalter S1 (Figur 6 b) wird zur Zeit t = 0 geschlossen und zur Zeit T/2 wieder geöffnet. Nach Ablauf einer Einschwingzeit wird Schalter S2 (Figur 6 c) von Zeit $t_1$ bis T/2 periodisch im Takt des 90°-Steuersignales geschlossen und geöffnet, nach Ablauf einer weiteren gleich bemessenen Einschwingzeit von $t_3$ bis T periodisch im Takt des 270°-Steuersignals geschlossen und geöffnet. Am Ausgang des Schalters S2 ergeben sich für beide Hälften der Taktzeit T gleiche positive und negative Signale (Figur 6 d), so daß nach Durchlaufen des Tiefpasses 74 kein Signal übrigbleibt. Lag am Eingang von Schalter S2 ein Signal 86 der Phasenlage 0° (Figur 6 a, nur eine Periode dargestellt), das von Salzwasser herrühren kann, so ergeben sich am Ausgang des Schalters S2 Signale 88 (Figur 6 e), deren positive und negative Anteile in jedem Steuertakt von Schalter S2 gleich sind, die sich also hinter dem Tiefpaßglied 70 herausheben. Allgemein gilt, daß Signale jeder beliebigen Phasenlage, die am Eingang von Schalter S2 stehen, dadurch unterdrückt werden, daß die positiven und negativen Signalanteile innerhalb einer Taktzeit T gleich sind und so herausfallen. Dies trifft nicht zu für ein Referenzsignal aus dem Phasenreferenzgeber 18, das nur vorliegt, wenn Schalter S1 geschlossen ist, also in der ersten Hälfte der Taktzeit T. Denkt man sich ein solches Signal zusammengesetzt aus einer 0°-Komponente 86 und einer 90°-Komponente 92, also ein Signal mit von Null abweichender Phasenlage, so ergeben sich Ausgangssignale 94, 96 (Figur 6 f, 6 g), die einander überlagert einen von Null abweichenden positiven Wert aufweisen. Liegt dagegen das Referenzsignal exakt in der 0°-Richtung, so entsteht (Figur 6 f) ein Ausgangssignal, das hinter dem Tiefpaß 70 und damit am Steuereingang 26 des Phasenstellgliedes Null ist. Auf diese Weise läßt sich eine wirksame Regelung auf den dem Referenzsignal entsprechende Phasenwinkel 0° durchführen. An den Schalter S2 werden hohe Anforderungen hinsichtlich der Kürze der Schaltzeit und der Unterdrückung von Schaltspitzen gestellt. Eine Möglichkeit zur Kompensation von Schalterfehlern bietet der von zwei eng benachbarten, z. B. in demselben integrierten Schaltkreis enthaltenen Schaltern, bei Verwendung einer Schaltung 38 b gemäß Figur 3. Weitere Vorteile sind eine bessere Unterdrückung von Störsignalen und von 50 Hz-Brumm sowie eine Anhebung des Regelsignalpegels um den Faktor 2.

Der phasenselektive Demodulator 40 im Regelschaltkreis 38 b gemäß Figur 3 benutzt zwei Schalter $S_{2a}$ und $S_{2b}$, an deren Steuereingänge 44 a und 44 b jeweils gegenphasig abwechselnd 90°- bzw. 270°-Steuersignale geführt werden, an deren Ausgängen infolgedessen gegenphasige Signale stehen. Die beiden Ausgänge sind mit den Eingängen zweier Tiefpaßglieder 100, 102 verbunden, die jeweils aus einem Widerstand 104, 108 und einem Kondensator 106, 110 bestehen. Die Ausgänge der beiden Tiefpaßglieder 100, 102 sind an die Eingänge eines Differenzverstärkers 112 angeschlossen, dessen Ausgangssignal am Steuereingang 26 des Phasendrehgliedes 24 liegt.

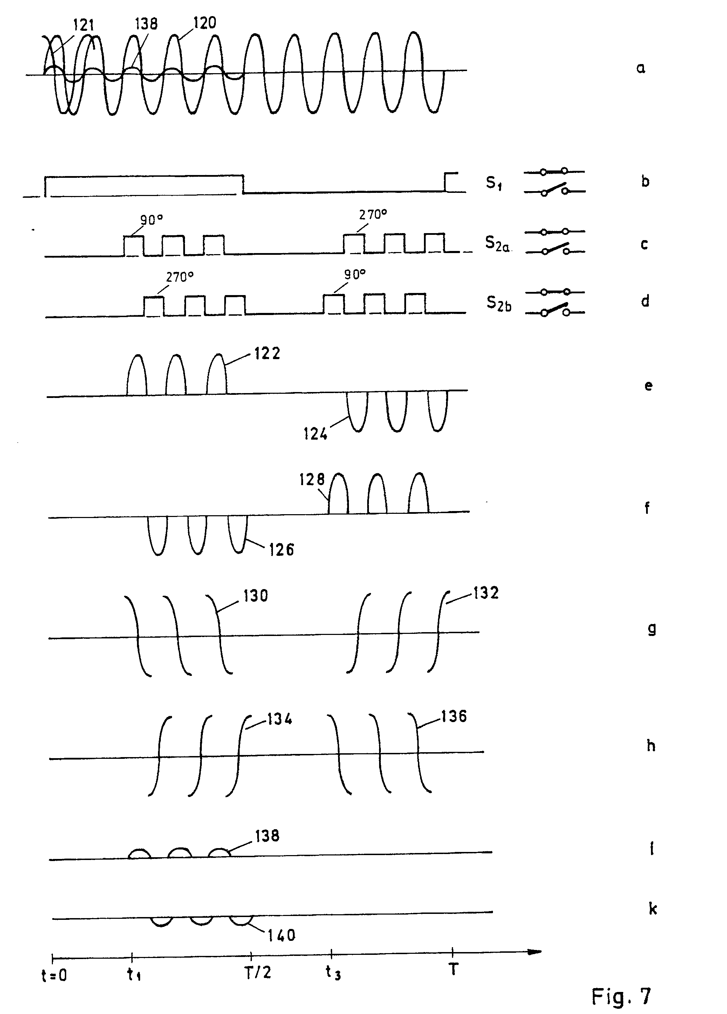

In Figur 7 sind die im Phasenregelkreis 38 b verarbeiteten Signale dargestellt. Schalter $S_1$ ist wiederum von t = 0 bis T/2 geschlossen, von T/2 bis T geöffnet (Figur 7 b), wodurch das Referenzsignal nur in der Zeit von t = 0 bis T/2 im Eingangssignal der beiden Schalter $S_{2a}$ und $S_{2b}$ enthalten ist. Schalter $S_{2a}$ wird in gleicher Weise wie Schalter $S_2$ von $f_1$ bis T/2 im Takt des 90°-Steuersignales von $t_3$ bis T im Takt des 270°-Steuersignales periodisch geschlossen und geöffnet (Figur 7 c). Dagegen wird Schalter $S_{2b}$ von $t_1$ bis T/2 im Takt des 270°-Steuersignales und von $t_3$ bis T im Takt des 90°-Steuersignales periodisch geschlossen und geöffnet (Figur 7 d). Liegt am Eingang der beiden Schalter $S_{2a}$, $S_{2b}$ ein Signal 120 der Phasenlage 90° (Figur 7 a) so erhalten wir an beiden Ausgängen Signale 122, 124; 126, 128, deren positive und negative Anteile sich über die Zeit T gegenseitig aufheben (Figur 7 e, 7 f) und die infolgedessen an den Eingängen des Verstärkers 112 keine Änderung bewirken. Die gleiche, nämlich keine Wirkung ergibt sich aus den Ausgangssignalen 130, 132; 134; 136 (Figur 7 g, 7 h) die von einem Eingangssignal 121 (Figur 7 a) der Phasenlage 0° herrühren. Anders verhält es sich bei einem Referenzsignal aus dem Referenzphasengeber 18, das ja nur in der Zeit von 0 bis T/2 vorliegt. Weicht ein solches vom Phasenwinkel 0° ab, d. h. besitzt es eine Komponente 138 (Figur 7 a) in der 90°-Richtung, so erhalten wir an den Ausgängen der beiden Schalter $S_{2a}$ und $S_{2b}$ Signale 138, 140 entgegengesetzter Polarität (Figur 7 i, 7 k), die nach erfolgter Siebung an den Tiefpaßgliedern 100, 102 an die Eingänge des Differenzverstärkers 112 gelangen. Dadurch verdoppelt sich, wie man leicht erkennen kann, die Wirkung des Regelsignales am Steuereingang 26 des Phasendrehgliedes 24.

In Figur 4 ist ein weiterer Phasenregelkreis 38 c in abgewandelter Ausführung dargestellt. Neben Schalter $S_{2c}$, der dem Schalter $S_2$ in Figur 2 entspricht, ist ein Schalter $S_{2d}$ vorgesehen, der über einen Invertierverstärker 142 an den Ausgang des Phasendrehgliedes 24 angeschlossen ist. Die beiden Schalter $S_{2c}$ und $S_{2d}$, deren Ausgänge parallel geschaltet sind, bilden einen phasenselektiven Demodulator 40 in Vollwellenausführung, dessen Ausgangssignale über ein Tiefpaßglied unmittelbar an den Steuereingang 26 des Phasendrehgliedes 24 gelegt werden könnten. Die zur vollständigen Unterdrückung der Wechselspannungsreste notwendige hohe Zeitkonstante eines Tiefpaßgliedes läßt sich reduzieren durch die Einführung eines weiteren Schalterpaares $S_{3a}$, $S_{3b}$, dessen gemeinsamer Eingang mit dem gemeinsamen Ausgang des Schalterpaares $S_{2c}$, $S_{2d}$ verbunden ist. Die Ausgänge der beiden Schalter $S_{3a}$, $S_{3b}$ sind jeweils über Tiefpaßglieder 144, 146 und Trennverstärker 148, 150 an die Eingänge einer summenbildenden Schaltung 152 geführt und gelangen von deren Ausgang zum Steuereingang 26 des Phasendrehgliedes 24.

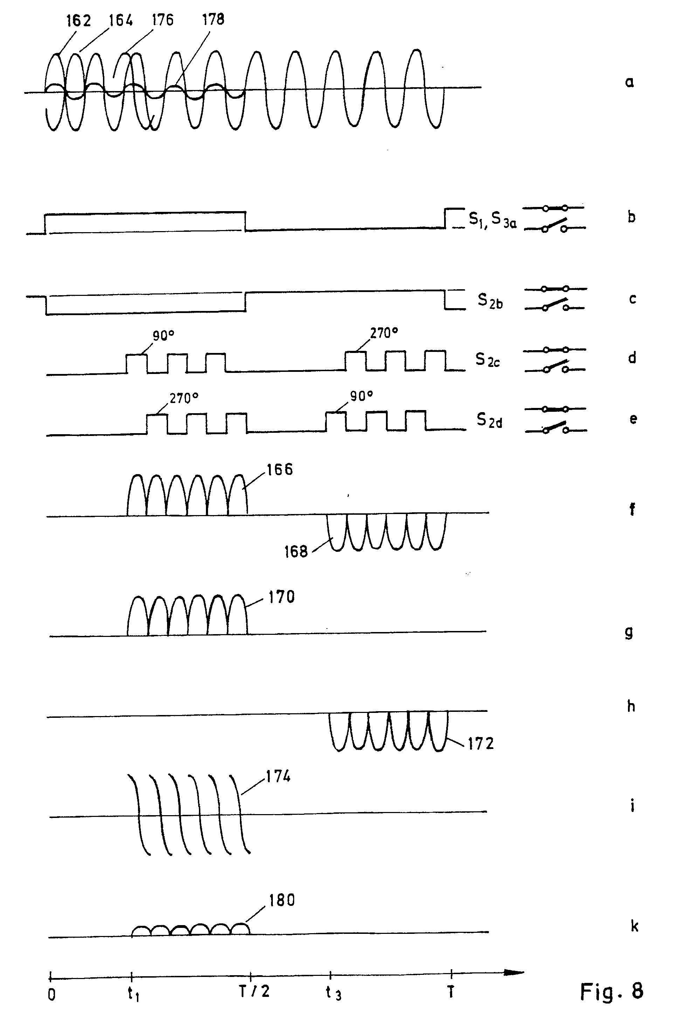

Die in Phasenregelkreis 38 c verarbeiteten Signale zeigt Figur 8. Schalter $S_1$ und $S_{3a}$ schließen zur Zeit t = 0 und öffnen zur Zeit T/2 (Figur 8 b), Schalter $S_{3b}$ öffnet zur Zeit t = 0 und schließt zur Zeit T/2 (Figur 8 c). Schalter $S_{2c}$ wird von $t_1$ bis T/2 im Takt des 90°-Steuersignales, von $t_3$ bis T im Takt des 270°-Steuersignales geschlossen und geöffnet (Figur 8 d). Dagegen wird Schalter $S_{2d}$ von $t_1$ bis T/2 im Takt des 270°-Steuersignales, von $t_3$ bis T im Takt des 90°-Steuersignales geschlossen und geöffnet (Figur 8 e). Ein 90°-Signal 162 am Eingang des Schalters $S_{2c}$ und dazu gegenphasige Signale 164 am Eingang des Schalters $S_{2d}$ (Figur 8 a) bewirken am Ausgang der beiden Schalter ein demoduliertes Vollwellensignal mit einem positiven Anteil 166 in der ersten Hälfte und einem negativen Anteil 168 in der zweiten Hälfte der Taktzeit T (Figur 8 f). Durch die Schalter $S_{3a}$ und $S_{3b}$ werden jeweils die positiven Anteile 170 an das Tiefpaßglied 144 (Figur 8 g) und die negativen Anteile 172 an das Tiefpaßglied 146 gelegt (Figur 8 h). Dadurch wird ein dauernder Wechsel der Polarität der am Tiefpaßglied anliegenden Restspannung vermieden und eine kleinere Zeitkonstante durch entsprechende Dimensionierung ermöglicht. Signalspannungen beliebiger Phasenlage führen zu gleich großen entgegengesetzt gepolten Gleichspannungen an den Ausgängen der beiden Trennverstärker 148, 150. Ihre Unterdrückung erfolgt durch Summierung in Schaltung 152. Nicht unterdrückt werden hier die Referenzsignale aus dem Referenzphasengeber 18, die nur in der ersten Hälfte der Taktzeit T vorliegen. Diese führen bei 0°-Phasenlage des Referenzsignales 176 zu einem Signal 174 am Eingang des Tiefpaßgliedes 144 (Figur 8 i) und zu einem Regelsignal Null am Steuereingang 26 des Phasendrehgliedes 24. Liegt jedoch eine Referenzsignalkomponente 178 in der 90°-Richtung vor, so ergibt sich eine Signalspannung 180 am Eingang des Tiefpaßglieds 144, die zu einem Regelsignal am Steuereingang 26 des Phasendrehgliedes 24 und damit zur Rückdrehung der unerwünschten Phasenverschiebung führt.

**Patentansprüche**

1. Induktives Metallsuchgerät mit einer Suchspule (12), die aus einer Erreger- (14) und mindestens einer Empfängerwicklung (16) besteht, mit einer an die Erregerwicklung (14) angeschlossenen Wechselstromquelle (10), die einen Wechselstrom in die Erregerwicklung (14) einspeist, um in deren Umgebung ein Magnetfeld aufzubauen, mit einer an die Empfängerwicklung (16) angeschlossenen Auswerteelektronik (30,34,36), in der Signale ausgewertet und angezeigt werden, die in der Empfängerwicklung (16) durch vom Magnetfeld erfaßte metallische Gegenstände induziert worden sind, und mit gekennzeichnet,

einem Phasenregelkreis (38), der den Phasenwinkel eines auszuwertenden Signales in einer starren Phasenbeziehung zu einem vorgebenenen Referenzphasenwinkel hält und der aus einem Phasendrehglied (24), aus einem mit dem Ausgang des Phasendrehgliedes (24) verbundenen phasengesteuerten Demodulator (40), dessen Ausgang wiederum mit dem Steuereingang (26) des Phasendrehgliedes (24) verbunden ist und aus einem Referenzphasengeber (18), der ein Referenzsignal mit dem oben genannten Referenzphasenwinkel hervorruft, besteht, dadurch gekennzeichnet, daß das Phasendrehglied (24) zwischen Empfängerwicklung (16) und Auswerteelektronik (30, 34, 36) geschaltet ist und daß der Referenzphasengeber (18) das Referenzsignal in der Empfängerwicklung (16) hervorruft.

2. Metallsuchgerät nach Anspruch 1, dadurch gekennzeichnet,

daß der Referenzphasengeber (18) eine Leiterschleife (20) benutzt, die sowohl mit der Erregerwicklung (14) als auch mit der Empfängerwicklung (16) gekoppelt ist und die durch einen Schalter ($S_1$) geschlossen werden kann.

3. Metallsuchgerät nach Anspruch 2, dadurch gekennzeichnet,

daß das Referenzsignal durch den genannten Schalter ($S_1$) periodisch mit einer Referenzschaltfrequenz $f_{RS}$ ein- und ausgeschaltet wird.

4. Metallsuchgerät nach Anspruch 2 oder 3, dadurch gekennzeichnet,

daß der phasengesteuerte Demodulator (40) bei eingeschaltetem Referenzsignal mit einem Steuersignal einer ersten Steuerphasenlage gesteuert wird und bei ausgeschaltetem Referenzsignal mit einem Steuersignal einer von der ersten um 180° abweichenden zweiten Steuerphasenlage gesteuert wird.

5. Metallsuchgerät nach Anspruch 4, dadurch gekennzeichnet,

daß der phasengesteuerte Demodulator (40) in jeder Halbperiode der Referenzschaltfrequenz $f_{RS}$ erst nach Ablauf einer gewissen Einschwingzeit durch ein Steuersignal angesteuert wird.

6. Metallsuchgerät nach einem der vorhergehenden Ansprüche, dadurch gekennzeichnet,

daß das/die Steuersignal(e) des phasengesteuerten Demodulators (40) gegenüber dem Referenzsignal des Referenzphasengebers (18) einen Phasenwinkelabstand von 90° aufweisen.

7. Metallsuchgerät nach einem der vorhergehenden Ansprüche, dadurch gekennzeichnet,

daß als Phasendrehglied (24) ein ohnehin bei der Signalverarbeitung benötigtes Filter benutzt wird.

8. Metallsuchgerät nach einem der vorhergehenden Ansprüche, dadurch gekennzeichnet,

daß mit dem Ausgang des phasengesteuerten Demodulators (40) der Eingang eines Tiefpaßgliedes (70) verbunden ist und daß dessen Ausgang an den Steuereingang (26) des Phasendrehgliedes (24) geführt ist.

9. Metallsuchgerät nach einem der Ansprüche 1 bis 7, dadurch gekennzeichnet,

daß der phasengesteuerte Demodulator (40) zwei gegenphasig arbeitende Ausgänge besitzt, die mit den Eingängen zweier Tiefpaßglieder (100, 102) verbunden sind, daß die Ausgänge der beiden letzteren an den Eingängen einer differenzbildenden Schaltung (112) liegen, deren Ausgang an den Steuereingang (26) des Phasendrehgliedes (24) geführt ist.

10. Metallsuchgerät nach einem der Ansprüche 4 oder 5, dadurch gekennzeichnet,

daß Schaltmittel ($S_{3a}$, $S_{3b}$) vorgesehen sind, die den Ausgang des phasengesteuerten Demodulators (40) bei Vorliegen des Steuersignals der ersten Steuerphasenlage am Steuereingang des phasengesteuerten Demodulators (40) mit dem Eingang eines ersten Tiefpaßgliedes (144) verbinden und die den Ausgang des phasengesteuerten Demodulators (40) bei Vorliegen des Steuersignales der zweiten Steuerphasenlage am Steuereingang des phasengesteuerten Demodulators (40) mit dem Eingang eines zweiten Tiefpaßgliedes (146) verbinden und daß die Ausgänge der beiden Tiefpaßglieder (144, 146) an den Eingängen einer summenbildenden Schaltung (152) liegen, deren Ausgang an den Steuereingang (26) des Phasendrehgliedes (24) geführt ist.

## Claims

1. Inductive metal detector with a search coil (12) consisting of an exciting winding (14) and at least one receiving winding (16), a source of alternating voltage (10) connected to the exciting winding (14) which feeds an alternating current into the exciting winding (14) in order to build up a magnetic field in its vicinity, an evaluating electronic system (30, 34, 36) connected to the receiving winding (16) and in which signals which have been induced in the receiving winding (16) by metal objects detected by the magnetic field are evaluated and indicated, and a phase control circuit (38) which keeps the phase angle of a signal to be evaluated in a rigid phase relationship to a given reference phase angle and consists of a phase shifter (24), a phase-controlled demodulator (40) connected to the output of the phase shifter (24) and whose output is connected in turn to the control input (26) of the phase shifter (24), and a reference phase transmitter (18) which produces a reference signal with the above-mentioned reference phase angle, characterised in that the phase shifter (24) is connected between the receiving winding (16) and the evaluating electronic system (30, 34, 36) and the reference phase transmitter (18) produces the reference signal in the receiving winding (16).

2. Metal detector according to Claim 1, characterised in that the reference phase transmitter (18) uses a conductor loop (20) which is coupled both to the energising winding (14) and to the receiving winding (16) and can be closed by a switch ($S_1$).

3. Metal detector according to Claim 2, characterised in that the reference signal is switched on and off periodically by the said switch ($S_1$) with a reference switching frequency $f_{RS}$.

4. Metal detector according to Claim 2 or 3, characterised in that with the reference signal switched on the phase-controlled demodulator (40) is controlled with a control signal of a first control phase position and with the reference signal switched off it is controlled with a control signal of a second control phase position differing from the first by 180°.

5. Metal detector according to Claim 4, characterised in that the phase-controlled demodulator (40) is triggered by a control signal in each half-period of the reference switching frequency $f_{RS}$ only after expiry of a certain building-up time.

6. Metal detector according to any one of the preceding claims, characterised in that the control signal(s) of the phase-controlled demodulator (40) has (have) a phase angle difference of 90° with respect to the reference signal of the reference phase transmitter (18).

7. Metal detector according to any one of the preceding claims, characterised in that a filter which is needed in any case in the processing of signals is used as the phase shifter (24).

8. Metal detector according to any one of the preceding claims, characterised in that the input of a low-pass element (70) is connected to the output of the phase-controlled demodulator (40) and its output is carried to the control input (26) of the phase shifter (24).

9. Metal detector according to any one of claims 1 to 7, characterised in that the phase-controlled demodulator (40) has two outputs working in phase opposition which are connected to the inputs of two low-pass elements (100, 102) and the outputs of the two latter are applied at the inputs of a difference-forming circuit (112) whose output is carried to the control input (26) of the phase shifter (24).

10. Metal detector according to either of claims 4 and 5, characterised in that switching means ($S_{3a}$, $S_{3b}$) are provided which connect the output of the phase-controlled demodulator (40) to the input of a first low-pass element (144) on presence of the control signal of the first control phase position at the control input of the phase-controlled demodulator (40) and which connect the output of the phase-controlled demodulator (40) to the input of a second low-pass element (146) on presence of the control signal of the second control phase position at the control input of the phase-controlled demodulator (40), and the outputs of the two low-pass elements (144, 146) are applied at the inputs of a summation circuit (152) whose output is carried to the control input (26) of the phase shifter (24).

**Revendications**

1. Détecteur inductif de métaux comportant une bobine de détection (12) qui est constituée d'un enroulement d'excitation (14) et d'au moins un enroulement de réception (16), comportant une source de courant alternatif (10), raccordée à l'enroulement d'excitation (14), laquelle source alimente l'enroulement d'excitation (14) en courant alternatif afin d'établir à son voisinage un champ magnétique, comportant un dispositif électronique d'analyse (30, 34, 36), raccordé à l'enroulement de réception (16), dans lequel sont analysés et affichés des signaux qui ont été induits dans l'enroulement de réception (16) par des objets métalliques compris dans le champ magnétique et comportant un circuit de régulation de phase (38) qui maintient l'angle de phase d'un signal à analyser dans un rapport de phase rigide par rapport à un angle de phase de référence donné et qui est constitué d'un organe de rotation de phase (24), d'un démodulateur (40) commandé en phase relié à la sortie de l'organe de rotation de phase (24), dont la sortie est reliée à son tour à l'entrée de commande (26) de l'organe de rotation de phase (24) et est constitué d'un transmetteur de phase de référence (18) qui engendre un signal de référence avec l'angle de phase de référence cité ci-dessus, caractérisé en ce que l'organe de rotation de phase (24) est monté entre l'enroulement de réception (16) et le dispositif d'électronique d'analyse (30, 34, 36) et en ce que le transmetteur de phase de référence (18) engendre le signal de référence dans l'enroulement de réception (16).

2. Détecteur de métaux selon la revendication 1, caractérisé en ce que le transmetteur de phase de référence (18) utilise une boucle de conducteur (20) qui est accouplée à l'enroulement d'excitation (14) ainsi qu'à l'enroulement de réception (16) et qui peut être fermée par un interrupteur ($S_1$).

3. Détecteur de métaux selon la revendication 2, caractérisé en ce que le signal de référence est périodiquement enclenché et déclenché avec une fréquence de commutation de référence ($f_{RS}$) par l'interrupteur ($S_1$) cité.

4. Détecteur de métaux selon la revendication 2 ou 3, caractérisé en ce que le démodulateur (40) commandé en phase est commandé, lorsque le signal de référence est enclenché, avec un signal de commande d'une première relation de phase de commande et, lorsque le signal de référence est coupé, avec un signal de commande d'une deuxième relation de phase de commande, s'écartant de 180° de la première.

5. Détecteur de métaux selon la revendication 4, caractérisé en ce que le démodulateur (40) commandé en phase est commandé dans chaque demi-période de la fréquence de manoeuvre de référence ($f_{RS}$) qu'après écoulement d'une certaine durée transitoire, par un signal de commande.

6. Détecteur de métaux selon l'une des revendications précédentes, caractérisé en ce que le signal/les signaux de commande du démodulateur (40) commandé en phase présente(nt) un écart angulaire de phase de 90°, par rapport au signal de référence du transmetteur de phase de référence (18).

7. Détecteur de métaux selon l'une des revendications précédentes, caractérisé en ce qu'on utilise comme organe de rotation de phase (24) un filtre qui est de toute façon nécessaire pour le traitement des signaux.

8. Détecteur de métaux selon l'une des revendications précédentes, caractérisé en ce que l'entrée d'un organe passe-bas (70) est reliée à la sortie du démodulateur (40) commandé en phase et en ce que sa sortie est reliée à l'entrée de commande (26) de l'organe de rotation de phase (24).

9. Détecteur de métaux selon l'une des revendications 1 à 7, caractérisé en ce que le démodulateur (40) commandé en phase possède deux sorties fonctionnant en opposition de phase qui sont reliées aux entrées de deux organes passe-bas (100, 102), en ce que les sorties de ces deux derniers sont reliées aux entrées d'un circuit (112) formant la différence, du (24).

10. Détecteur de métaux selon l'une des revendications 4 ou 5, caractérisé en ce qu'il est prévu des moyens de commutation ($S_{3a}$, $S_{3b}$) qui relient la sortie du démodulateur (40) commandée en phase, en présence du signal de commande de la première relation de phase de commande, à l'entrée de commande du démodulateur (40) commandé en phase, avec l'entrée d'un premier organe passe-bas (144) et qui relient la sortie du démodulateur (40) commandé en phase, en présence du signal de commande de la deuxième relation de phase de commande à l'entrée de commande du démodulateur (40) commandé en phase, avec l'entrée d'un deuxième organe passe-bas (146) et en ce que les sorties des deux organes passe-bas (144, 146) sont reliées aux entrées d'un circuit (152) totalisateur dont la sortie est reliée à l'entrée de commande (26) de l'organe de rotation de phase (24).

Fig.1

Fig.2

Fig.3

Fig. 4

Fig. 5

Fig. 6

EP 0 281 014 B1

Fig. 7

Fig. 8